# EUROPEAN PATENT APPLICATION

(11) **EP 3 518 258 A1**
(43) Date of publication of application: **31.07.2019**
(21) Application number: 17853158.8
(22) Date of filing: 22.09.2017
(51) Int. Cl.: H01F 41/02, B22F 3/00, B22F 3/02, B22F 3/10, C22C 38/00, H01F 1/057, H02K 15/03

(54) **METHOD FOR MANUFACTURING SINTERED BODY FOR FORMING SINTERED MAGNET, AND METHOD FOR MANUFACTURING PERMANENT MAGNET USING SINTERED BODY FOR FORMING SINTERED MAGNET**

(30) Priority: 23.09.2016 JP 2016185822
(71) Applicant: Nitto Denko Corporation, Ibaraki-shi, Osaka 567-8680 (JP)
(72) Inventor: EBE, Hirofumi, Ibaraki-shi Osaka 567-8680 (JP); OZEKI, Izumi, Ibaraki-shi Osaka 567-8680 (JP); YAMAMOTO, Takashi, Ibaraki-shi Osaka 567-8680 (JP); FUJIKAWA, Kenichi, Ibaraki-shi Osaka 567-8680 (JP)
(74) Representative: Gill Jennings & Every LLP
(86) International application number: PCT/JP2017/034220
(87) International publication number: WO 2018/056390

(57) **Abstract**

Provided are: a method for manufacturing a sintered body as a base of a sintered magnet, the method improving followability of a formed body to a sintering die during sintering and also preventing occurrence of cracks in the formed body; and a method for manufacturing a permanent magnet. Specifically, a magnet raw material is pulverized into magnet powder, the magnet powder pulverized and a binder are mixed, thereby to form a compound 12. The, a formed body 13, obtained by forming the compound 12 formed, is sintered by heating up the same to a firing temperature in a pressed state at a predetermined heat-up rate, and by keeping the same at the firing temperature. In the sintering step, the pressure value for pressing the formed body 13 is set to: less than 3 MPa from the start of heating up of the formed body 13 to a predetermined timing during heating up of the formed body 13; and 3 MPa or more after the timing.

## Description

### [Technical Field]

The present invention relates to a method for manufacturing a sintered body as a base of a sintered magnet and a method for manufacturing a permanent magnet using the sintered body as a base of a sintered magnet.

### [Background Art]

In recent years, in permanent magnet motors used in hybrid cars, hard disk drives, and the like, miniaturization and weight reduction, higher output, and higher efficiency are required. Therefore, in order to realize the above-mentioned miniaturization and weight reduction, higher output, and higher efficiency of the permanent magnet motors, permanent magnets embedded in the motors are required to be thinner and to be further improved in magnetic characteristics.

Here, as a method for manufacturing a sintered magnet, which is a permanent magnet used in the permanent magnet motor, there has heretofore been generally used a powder sintering method. Here, in the powder sintering method, magnet powder is first produced by pulverizing a raw material by a jet mill (dry pulverization) and the like. Thereafter, the magnet powder is charged into a form and press-formed into a desired shape. Then, a sintered body is manufactured by sintering a formed body of the magnet powder, formed in a desired shape, in a vacuum atmosphere at a predetermined firing temperature (for example, 1100°C in a Nd-Fe-B based magnet). However, there has been a problem that, when sintering of the formed body is performed in a vacuum atmosphere, followability of the formed body to the sintering die is poor, and the shape of the sintered body after sintering becomes one which is greatly different from the shape the manufacturer has intended. As a result, there has arisen necessity of further fabricating the sintered body after sintering into a product shape, and also the yield has decreased. Therefore, for example, Japanese Patent Laid-Open Publication No. H10-163055 discloses performing, when sintering a formed body, pressure sintering (for example, discharge plasma sintering) where the formed body is sintered in a state pressed to 0.25 ton/cm² (about 25 MPa). It is known that, by performing pressure sintering, the above-mentioned followability of the formed body to the sintering die is improved.

### [Citation List]

### [Patent Document]

[Patent Literature 1]
Japanese Patent Laid-Open Publication No. H10-163055 (p3)

### [Summary of the Invention]

### [Problems to be Solved by the Invention]

However, when performing the pressure sintering, there has been a problem that cracks occur in the formed body in a sintering step when pressing is performed under high pressure (for example, 25 MPa) such as described, for example, in Patent Literature 1. As a result, there has been a fear that strength of a permanent magnet manufactured using a sintered body after sintering decreases and also magnet characteristics deteriorate. On the other hand, when pressing is performed under low pressure, there is a problem that followability of the formed body to the sintering die cannot be improved sufficiently.

The present invention has been made in order to solve the aforementioned conventional problems and aims to provide: a method for manufacturing a sintered body as a base of a sintered magnet, which, by performing sintering in a pressed state in a step of sintering a formed body of magnet powder, has improved followability to a sintering die and is also prevented from occurrence of cracks in the formed body; and a method for manufacturing a permanent magnet.

### [Means for Solving the Problems]

In order to achieve the aforementioned aims, a method for manufacturing a sintered body as a base of a sintered magnet according to Claim 1 of the present application comprises a step of heating up a formed body obtained by forming magnet powder to a firing temperature and thereafter sintering the formed body by keeping in a pressurized state, wherein in the sintering step, a pressure value for pressing the formed body is set to: less than 3 MPa from the start of heating up of the formed body to a predetermined timing during heating up of the formed body; and 3 MPa or more after the timing .

In addition, the term "less than 3 MPa" includes 0 (no pressure).

Further, a method for manufacturing a sintered body as a base of a sintered magnet according to Claim 2 is the method for manufacturing a sintered body as a base of a sintered magnet according to Claim 1, wherein the timing when the pressure value is set to 3 MPa or more is any timing when the temperature of the formed body is in the range of 300°C to 900°C.

Furthermore, a method for manufacturing a sintered body as a base of a sintered magnet according to Claim 3 is the method for manufacturing a sintered body as a base of a sintered magnet according to Claim 1, wherein the timing when the pressure value is set to 3 MPa or more is a timing when magnet powder contained in the formed body begins to fuse.

Besides, a method for manufacturing a sintered body for as a base of a sintered magnet according to Claim 4 is the method for manufacturing a sintered body as a base of a sintered magnet according to any one of Claims 1 to 3, wherein the formed body is sintered in a state where the pressure value is set to 3 MPa or more after the timing by raising the temperature of the formed body finally to 900°C or higher and keeping the temperature thereat.

Further, a method for manufacturing a sintered body for as a base of a sintered magnet according to Claim 5 is the method for manufacturing a sintered body as a base of a sintered magnet according to any one of Claims 1 to 4, wherein a maximum value of the pressure value for pressing the formed body is 30 MPa or less.

Furthermore, a method for manufacturing a sintered body for as a base of a sintered magnet according to Claim 6 is the method for manufacturing a sintered body as a base of a sintered magnet according to any one of Claims 1 to 5, wherein in the sintering step, the heat-up rate of the formed body is 20°C/min or higher.

Besides, a method for manufacturing a sintered body as a base of a sintered magnet according to Claim 7 is the method for manufacturing a sintered body as a base of a sintered magnet according to any one of Claims 1 to 6, further comprising a step of subjecting the magnet powder to magnetic field orientation by applying a magnetic field to the formed body, wherein in the sintering step, the formed body is pressed in a direction vertical to the direction of orientation of the magnet powder.

Further, a method for manufacturing a sintered body as a base of a sintered magnet according to Claim 8 is the method for manufacturing a sintered body as a base of a sintered magnet according to any one of Claims 1 to 7, wherein the formed body is obtained by executing a debinding process of a green body formed of a mixture containing magnet powder and a binder.

Moreover, a method for manufacturing a permanent magnet according to Claim 9 comprises a step of magnetizing the sintered body as a base of a sintered magnet, manufactured by the method for manufacturing a sintered body as a base of a sintered magnet according to any one of Claims 1 to 8.

### [Advantageous Effects of Invention]

According to the method for manufacturing a sintered body as a base of a sintered magnet according to Claim 1, the method having the above configuration, it becomes possible, in a step of sintering the formed body of magnet powder, to improve followability of the formed body to a sintering form by sintering the same in a pressed state and to prevent occurrence of cracks in the formed body. As a result, it becomes possible to provide a permanent magnet, which also has excellent magnetic characteristics after magnetization, at a low cost without lowering the yield.

Further, according to the method for manufacturing a sintered body as a base of a sintered magnet according to Claim 2, the timing when the pressure value is set to 3 MPa or more in the sintering step is set to any timing when the temperature of the formed body is in the range of 300°C to 900°C. Therefore, by increasing the pressure value at a suitable timing, it becomes possible to improve followability of the formed body to the sintering die and also to prevent occurrence of cracks in the formed body.

Furthermore, according to the method for manufacturing a sintered body as a base of a sintered magnet according to Claim 3, the timing in the sintering step when the pressure value is set to 3 MPa or more is set to a timing when magnet powder contained in the formed body begins to fuse. Therefore, by increasing the pressure value at a proper timing, it becomes possible to improve followability of the formed body to the sintering die and also to prevent occurrence of cracks in the formed body.

Besides, according to the method for manufacturing a sintered body as a base of a sintered magnet according to Claim 4, the formed body is sintered by keeping the temperature of the formed body at 900°C or higher in a state where the pressure value is set to 3 MPa or more. Therefore, density of the formed body after sintering (hereafter, referred to as a sintered body) is increased, and magnetic characteristics of the sintered body after magnetization and strength of the sintered body can be improved.

Further, according to the method for manufacturing a sintered body as a base of a sintered magnet according to Claim 5, the maximum value of the pressure value for pressing the formed body in the sintering step is set to 30 MPa or less. Therefore, it becomes possible to improve followability of the formed body to the sintering die and also to prevent occurrence of cracks in the formed body.

Furthermore, according to the method for manufacturing a sintered body as a base of a sintered magnet according to Claim 6, the heat-up rate of the formed body is set to 20°C/min or higher in the sintering step. Therefore, while performing sintering of the formed body properly, it becomes possible also to realize improvement of followability of the formed body to the sintering die by pressing.

Besides, according to the method for manufacturing a sintered body as a base of a sintered magnet according to Claim 7, in the sintering step, the formed body is pressed in a direction vertical to the direction of orientation of the magnet powder. Therefore, there is no change in the direction of C-axis (axis of easy magnetization) of magnet particles after orientation by pressing of the formed body. Accordingly, there is no fear that the degree of orientation is reduced and it becomes possible also to prevent deterioration of magnetic characteristics.

Further, according to the method for manufacturing a sintered body as a base of a sintered magnet according to Claim 8, even if the formed body was a green body formed of a mixture containing magnet powder and a binder, it becomes possible, by sintering the formed body in a pressed state, to improve followability of the formed body to the sintering die and also to prevent occurrence of cracks in the formed body.

Moreover, according to the method for manufacturing a permanent magnet according to Claim 9, it becomes possible, in a step of sintering a formed body of magnet powder, to improve followability of the formed body to the sintering die and also to prevent occurrence of cracks in the formed body by sintering the formed body in a pressed state. As a result, it becomes possible, without lowering the yield, to provide a permanent magnet which is also excellent in magnet characteristics at a low cost.

### [Brief Description of the Drawings]

Fig. 1 is an overall view showing a permanent magnet according to the present invention.
Fig. 2 is an explanatory diagram showing a manufacturing process of a sintered body as a base of a sintered magnet and a method for manufacturing a permanent magnet using the sintered body as a base of a sintered magnet, both according to the present invention.
Fig. 3 is a diagram illustrating a heat-up mode and a variation mode of the pressure value in, especially, the pressure sintering step among the manufacturing process of the sintered body as a base of a sintered magnet according to the present invention.
Fig. 4 is a diagram showing shapes of respective formed bodies in Examples and Comparative Examples.
Fig. 5 is a diagram showing a rate of displacement of a punch for pressing (a shrinkage factor in the direction of pressing during sintering).

### [Description of the Embodiments]

Hereinafter, there will be described one embodiment in detail with reference to the drawings, in which there have been realized the method for manufacturing a sintered body as a base of a sintered magnet and the method for manufacturing a permanent magnet using the sintered body as a base of a sintered magnet, both according to the present invention

### [Configuration of Permanent Magnet]

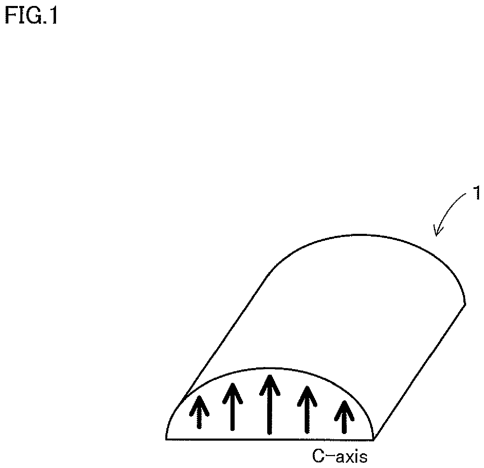

First, there will be described an example of a configuration of a permanent magnet 1 manufactured using the sintered body as a base of a sintered magnet according to the present invention. Fig. 1 is an overall view of the permanent magnet 1.

The permanent magnet 1 is preferably a rare earth-based anisotropic magnet such as a Nd-Fe-B-based magnet and the like. In addition, the orientation direction of C-axis (axis of easy magnetization) can be suitably set depending on the shape and use of the permanent magnet 1. As an example, in a magnet having a semi-cylindrical shape shown in Fig. 1, the C-axes become oriented, as an example, in parallel directions from the planar surface to the curved surface. Meanwhile, the permanent magnet 1 does not necessarily need to be an anisotropic magnet but may be an isotropic magnet.

Further, contents of respective components in weight percentage are set, for example, as follows. R (R represents one or two or more of rare earth elements including Y): 27.0 to 40.0 wt% (preferably 28.0 to 35.0 wt%, more preferably 28.0 to 33.0 wt%), B: 0.6 to 2 wt% (preferably 0.6 to 1.2 wt%, more preferably 0.6 to 1.1 wt%), and Fe (preferably electrolytic iron): the remainder. Furthermore, in order to improve magnetic characteristics, there may be contained small amounts of other elements such as Co, Cu, Al, Si, Ga, Nb, V, Pr, Mo, Zr, Ta, Ti, W, Ag, Bi, Zn, Mg, and the like, and a small amount of inevitable impurities. Fig. 1 is an overall view showing the permanent magnet 1 according to the present embodiment.

Here, the permanent magnet 1 is a permanent magnet having various shapes such as, for example, a semi-cylindrical shape and the like. In addition, even though the permanent magnet shown in Fig. 1 has a semi-cylindrical shape, it is possible to change the shape of the permanent magnet 1 arbitrarily depending on the use thereof. For example, it can be formed into a cuboid shape, a trapezoid shape, and a fan shape. Then, the permanent magnet 1, as described below, can be prepared by sintering a formed body of magnet powder, formed by pressure powder forming or by sintering a formed body, obtained by forming a mixture (a slurry or a compound) in which magnet powder and a binder are mixed.

### [Method for Manufacturing Permanent Magnet]

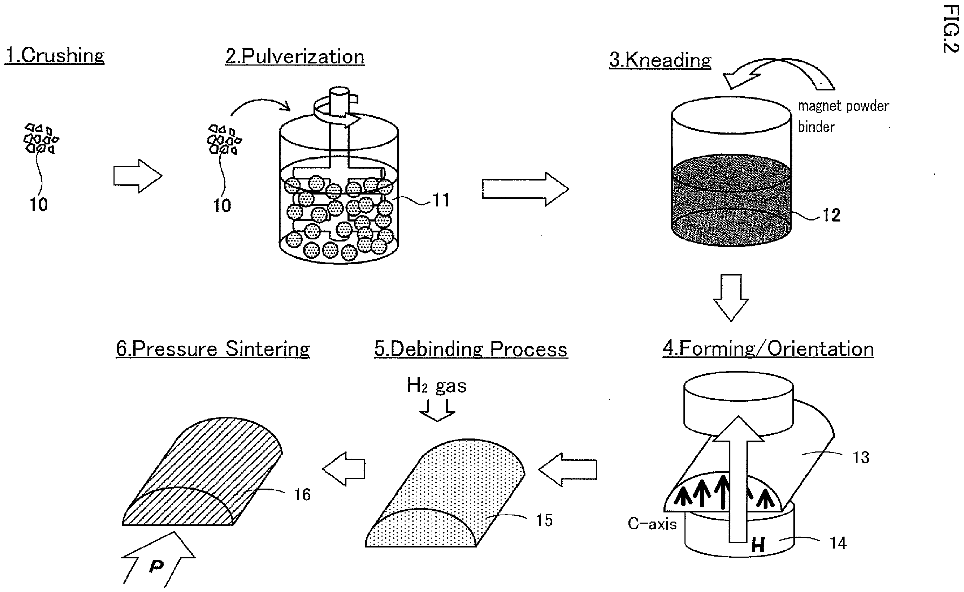

Next, there will be described one embodiment of the method for manufacturing a sintered body as a base of a sintered magnet and the method for manufacturing a permanent magnet 1 using the sintered body as a base of a sintered magnet, both according to the present invention, by using Fig. 2. Fig. 2 is an explanatory diagram showing the manufacturing process of a sintered body as a base of a sintered magnet and the method for manufacturing a permanent magnet 1 using the sintered body as a base of a sintered magnet, both according to the present embodiment.

First, there is manufactured by a strip casting method an ingot comprising Nd-Fe-B of predetermined fractions (for example, Nd: 23.0 wt %, Fe (electrolytic iron): the remainder, B: 1.00 wt %, Pr: 6.75 wt%, Cu: 0.10 wt%, Ga: 0.10 wt%, Nb: 0.20 wt%, Co: 2.00 wt%, and Al: trace). Thereafter, the ingot is crushed by a stamp mill, a crusher, and the like to a size of approximately 200 µm. Or, the ingot is melted, formed into flakes by a strip casting method, and then coarsely powdered by a hydrogen crushing method, wherein coarse powdering is performed by making the flakes absorb hydrogen. Thereby, crushed magnet powder 10 is obtained. Coarse powdering is preferably performed by the hydrogen crushing method, where the maximum temperature during hydrogen adsorption is preferably 600°C or lower, more preferably 550°C or lower. By performing coarse powdering by the hydrogen crushing method, dispersibility of rare earth-rich phase increases and magnetic characteristics tend to improve. Further, by setting the highest temperature reached during hydrogen adsorption to preferably 600°C or lower, more preferably 550°C or lower, it is possible to suppress hydrogen decomposition of the magnet alloy (flake). When hydrogen decomposition occurs, there is a fear that the particle size of the magnet powder becomes very small and, when pressure sintering of the present invention is performed, abnormal particle growth is accelerated, resulting in deterioration of magnetic characteristics.

Subsequently, the crushed magnet powder 10 is pulverized by a wet method with a bead mill 11, a dry method with a jet mill, or the like. For example, in pulverization using the wet method by a bead mill 11, the crushed magnet powder 10 is pulverized in a solvent to a particle size in a predetermined range (for example, 0.1 µm to 5.0 µm) and, at the same time, the magnet powder is dispersed in the solvent. Thereafter, the magnet powder contained in the solvent after wet pulverization is dried by vacuum drying and the like, and the dried magnet powder is taken out. Further, the kind of solvent used for pulverization is not particularly limited, and there can be used: alcohols such as isopropyl alcohol, ethanol, methanol, and the like; esters such as ethyl acetate and the like; lower hydrocarbons such as pentane, hexane, and the like; aromatics such as benzene, toluene, xylene, and the like; ketones; and mixtures of these. In addition, preferably, there is used a solvent which does not contain an oxygen atoms(s) therein. A median particle size (D50) of the pulverized magnet powder is preferably in a range of 1 µm to 10 µm, more preferably in a range of 1 µm to 5 µm. By using pulverized magnet powder in the above-mentioned range, there occurs fusion of the magnet powder particles with each other suitably during heating up and it is possible to prevent cracking of a sintered body due to pressure sintering.

On the other hand, in pulverization using a dry method with a jet mill, the crushed magnet powder is pulverized by a jet mill in (a) an atmosphere comprising an inert gas such as nitrogen gas, argon (Ar) gas, helium (He) gas, or the like, where the oxygen content is substantially 0% or (b) an atmosphere comprising an inert gas such as nitrogen gas, Ar gas, He gas, or the like where the oxygen content is 0.0001 to 0.5% to obtain fine powder having an average particle size in a predetermined range (for example, 0.7 µm to 5.0 µm). In addition, that the oxygen concentration is substantially 0% is not limited to a case where the oxygen concentration is completely 0%, but means that there may be contained oxygen of such an amount as to form a very slight oxide film on the surface of fine powder. A median particle size (D50) of the pulverized magnet powder is preferably in a range of 1 µm to 10 µm, more preferably in a range of 1 µm to 5 µm. By using the pulverized magnet powder in the above-mentioned range, there occurs fusion of the magnet powder particles with each other suitably during heating up and it is possible to prevent cracking of a sintered body due to pressure sintering.

Next, the magnet powder pulverized by a bead mill 11 and the like is formed into a desired shape. In addition, to mold the magnet powder, there may be used, for example, pressure powder forming where the magnet powder is formed into a desired shape using a mold and green body forming where a mixture obtained by mixing the magnet powder and a binder is formed into a desired shape. Moreover, the pressure powder forming includes a dry method of filling dried fine powder into a cavity and a wet process of filling a slurry containing the magnet powder into a cavity without drying. On the other hand, the green body forming includes: hot-melt forming where a compound obtained by mixing the magnet powder and a binder is formed in a heat-melted state; and slurry forming where a slurry containing the magnet powder, a binder, and an organic solvent is formed. Further, in the green body forming, the mixture may be subjected to magnetic field orientation by applying a magnetic field in a state where the mixture is temporarily formed into a shape other than the product shape and thereafter formed into a product shape (for example, the semi-cylindrical shape shown in Fig. 1) by performing punching, cutting, deformation processing, and the like, or the compound may be formed directly into the product shape.

In the following, especially, one example of hot-melt forming will be described.

First, by mixing a binder with magnet powder pulverized by a bead mill 11 and the like, there is prepared a clayish mixture (compound) 12 comprising magnet powder and a binder.

As the binder to be mixed with the magnet powder, there are used resins, long chain hydrocarbons, fatty acid methyl esters, mixtures of these, and the like. For example, there may be mentioned polyisobutylene (PIB) which is a polymer of isobutylene, polyisoprene (isoprene rubber, IR) which is a polymer of isoprene, polybutadiene (butadiene rubber, BR) which is a polymer of 1,3-butadiene, polystyrene which is a polymer of styrene, a styrene-isoprene block copolymer (SIS) which is a copolymer of styrene and isoprene, butyl rubber (IIR) which is a copolymer of isobutylene and isoprene, a styrene-butadiene block copolymer (SBS) which is a copolymer of styrene and butadiene, a 2-methyl-1-pentene polymerized resin which is a polymer of 2-methyl-1-pentene, a 2-methyl-1-butene polymerized resin which is a polymer of 2-methyl-1-butene, an α-methylstyrene polymerized resin which is a polymer of α-methylstyrene, and the like. Meanwhile, to the α-methylstyrene polymerized resin, it is preferable to add low molecular weight polyisobutylene in order to impart flexibility. Further, a resin used as a binder may be a composition containing a small amount of a polymer or a copolymer of a monomer containing an oxygen atom(s) (for example, polybutyl methacrylate, polymethyl methacrylate, and the like).

Moreover, when a resin is used as the binder, it is preferable to use a polymer which does not contain oxygen atoms in the structure and has a property to be depolymerized. Further, in order to perform magnetic field orientation in a state where a formed body after forming is softened by heating, a thermoplastic resin is used. In order to perform magnetic field orientation properly, it is desirable to use a thermoplastic resin which softens at 250°C or lower, or more specifically, it is desirable to use a thermoplastic resin having a glass transition point or a flow starting temperature of 250°C or lower.

On the other hand, when a long-chain hydrocarbon is used as the binder, it is preferable to use a long-chain saturated hydrocarbon (long-chain alkane) which is a solid at room temperature and a liquid at room temperature or higher. Specifically, it is preferable to use a long-chain saturated hydrocarbon having a number of carbon atoms of 18 or more. And, when performing magnetic field orientation of the formed body as described below, the magnetic field orientation is performed in a state where the formed body is softened by heating at a glass transition point or higher, or at a flow starting temperature or higher of the long-chain hydrocarbon.

Further, also when a fatty acid methyl ester is used as the binder, it is similarly preferable to use methyl stearate, methyl docosanoate, or the like, which is a solid at room temperature and is a liquid at room temperature or higher. And, when performing magnetic field orientation as described below, the magnetic field orientation is performed in a state where the formed body is softened by heating at a flow starting temperature or higher of the fatty acid methyl ester.

By using a binder which satisfies the above conditions as the binder to be mixed with the magnet powder, it becomes possible to reduce amounts of carbon and oxygen contained in the magnet. Specifically, the amount of carbon remaining in the magnet after sintering is reduced to 2000 ppm or less, more preferably 1500 ppm or less, even more preferably 1000 ppm or less. Furthermore, the amount of oxygen remaining in the magnet after sintering is reduced to 5000 ppm or less, more preferably 3500 ppm or less, even more preferably 2000 ppm or less.

Furthermore, the amount of the binder added is set to an amount which properly fills the space between magnet particles in order to improve thickness accuracy of a sheet when forming the slurry or heat-melted compound into a sheet-like shape. For example, a fraction of the binder to the total amount of the magnet particles and the binder is set to 1 wt% to 40 wt%, more preferably 2 wt% to 30 wt%, even more preferably 5 wt% to 20 wt%, especially preferably 7 wt% to 15 wt%.

In addition, the above-mentioned compound 12 may be a composition to which an orientation lubricant is added in order to improve the degree of orientation during magnetic field orientation described below. Especially, when using the green body forming, a binder is present on the particle surface and, therefore, friction during orientation increases and orientation of particles deteriorates. Thus, an effect of addition of the orientation lubricant becomes larger.

Subsequently, a formed body 13 is formed from the compound 12. Especially, in hot melt forming, the compound 12 is formed into a desired shape after melting the compound 12 by heating into a fluid state. Thereafter, by solidifying the formed compound by heat radiation, there is formed a formed body 13. In addition, the temperature when heat-melting the compound 12 is set to 50 to 300°C, even though it varies depending on the kind and amount of the binder used. However, the temperature needs to be set at a higher temperature than the flow starting temperature of the binder used.

For example, when forming the compound 12 into a sheet-shaped formed body 13, the compound 12 is melted into a fluid state by heating the same and thereafter coated on a supporting substrate such as a separator and the like. Subsequently, by solidifying the compound by heat radiation, there is formed a long sheet-like formed body 13 on the supporting substrate. Further, instead of coating the compound 12 on the supporting substrate, melted compound 12 is formed into a sheet-like shape by extrusion forming or injection forming, and is extruded onto the supporting substrate to, thereby, form a long sheet-like formed body 13 on the supporting substrate.

Next, magnetic field orientation is performed on the formed body 13 after forming. Specifically, the formed body 13 is first softened by heating the same. Specifically, the formed body 13 is softened until viscosity thereof becomes 1 to 1500 Pa·s, more preferably 1 to 500 Pa·s. Thereby, it becomes possible to have magnetic field orientation performed properly.

In addition, even though the temperature and time when heating the formed body 13 vary depending on the kind and amount of the binder used, they are set, for example, to 100 to 250°C for 0.1 to 60 minutes. However, in order to soften the formed body 13, it is necessary to set the temperature to a glass transition point or higher, or flow starting temperature or higher of the binder used. Further, as a method for heating the formed body 13, there are, for example, a heating method by a hot plate and a heating method using a heat medium (silicone oil) as a heat source. Subsequently, magnetic field orientation is performed by applying a magnetic field to the formed body 13 softened by heating using a magnetic field source 14. Strength of the magnetic field applied is set to 5000 [Oe] to 150000 [Oe], preferably 10000 [Oe] to 120000 [Oe]. As the magnetic field source, there is used, for example, a solenoid.

As a result, the C-axes (axes of easy magnetization) of the magnet crystals contained in the formed body 13 become oriented in one direction. Meanwhile, the direction of application of the magnetic field is determined depending on the product shape and product use. Furthermore, the direction of orientation may be a parallel direction or a radial direction. Besides, the process configuration may be such that the magnetic field orientation step is not performed.

Moreover, when applying a magnetic field to the formed body 13, the process configuration may include performing a step of applying a magnetic field at the same time as the heating step or performing the step of applying a magnetic field after performing the heating step and before solidification of the formed body 13. Further, the process configuration may be such that magnetic field orientation is performed before solidification of the formed body 13 formed by hot melt forming. In that case, the heating step becomes unnecessary. Furthermore, it is desirable that, after performing an orientation treatment, a demagnetization treatment is performed by applying an attenuating alternating magnetic field to the formed body 13.

In addition, after performing magnetic field orientation of the formed body 13, the formed body 13 may be formed into a final product shape by deformation by application of a load thereto. Meanwhile, by the deformation, it is also possible to displace the direction of the axis of easy magnetization so that it coincides with the direction of the axis of easy magnetization required in the final product. Thereby, it becomes possible to manipulate the direction of the axis of easy magnetization.

Thereafter, an oil removal treatment is performed by heating the formed body 13, which has been formed and subjected to magnetic field orientation, under a vacuum atmosphere. In addition, the oil removal treatment may be omitted.

Subsequently, a binder removal treatment is performed by keeping the formed body 13, after having been subjected to the oil removal treatment, in a non-oxidizing atmosphere (especially, in the present invention, a hydrogen atmosphere or a mixed gas atmosphere of hydrogen and an inert gas) at a binder decomposition temperature for several to several tens of hours (for example, 5 hours), the non-oxidizing atmosphere being of atmospheric pressure or being pressurized to a pressure (for example, 1.0 Pa or 1.0 MPa) which is higher or lower than atmospheric pressure. When performing the binder removal treatment under hydrogen atmosphere, the feed rate of hydrogen during the binder removal treatment is set, for example, to 5 L/min. By performing the binder removal treatment, it becomes possible to remove an organic compound such as a binder and the like by decomposing the organic compound into a monomer by a depolymerization reaction and the like and evaporating the monomer. That is, so-called decarbonization of reducing a carbon content in the formed body 13 is performed. Further, the binder removal treatment is performed under conditions where the carbon content in the formed body 13 is reduced to 2000 ppm or less, more preferably 1500 ppm or less, even more preferably 1000 ppm or less. Thereby, it becomes possible, in the subsequent sintering treatment, to sinter the whole of the formed body 13 densely, and deterioration of residual magnetic flux density and coercive force is suppressed. Furthermore, when the pressing condition is set to a pressure higher than atmospheric pressure when performing the above-mentioned binder removal treatment, the pressure is preferably set to 15 MPa or less. In addition, when the pressing condition is set to a pressure higher than atmospheric pressure, more specifically to 0.2 MPa or more, especially an effect of carbon content reduction can be expected.

Meanwhile, the binder decomposition temperature is determined based on analytical results of decomposition products of the binder and decomposition residue. Specifically, the decomposition products of the binder are collected, and there is selected a temperature range in which decomposition products other than a monomer are not produced and, in an analysis of the residue also, no product due to a side reaction of a residual binder component is detected. The temperature range, even though it varies depending on the kind of the binder, is set to 200°C to 900°C, more preferably 300°C to 600°C, even more preferably 350°C to 550°C (for example, 450°C).

Further, in the binder removal treatment, the heat-up rate is preferably set smaller compared to the case where sintering of a general magnet is performed. Specifically, the heat-up rate is set to 2°C/min or lower (for example, 1.5°C/min). Therefore, when performing the binder removal treatment, the temperature is raised at a predetermined heat-up rate and, after reaching the preset temperature (binder decomposition temperature) set beforehand, the formed body is kept at the preset temperature for several hours to several tens of hours to perform the binder removal treatment. By making the heat-up rate smaller as described above, carbon in the formed body 13 is not removed abruptly but is removed gradually. Therefore, it becomes possible to increase density of the permanent magnet after sintering (that is, to decrease pores in the permanent magnet). And, when the heat-up rate is set to 2°C/min or lower, the density of the permanent magnet after sintering can be made to be 95% or more, and high magnetic characteristics can be expected.

Furthermore, a dehydrogenation treatment may be performed by subsequently keeping the formed body 15 after the binder removal treatment in a vacuum atmosphere. In the dehydrogenation treatment, NdH₃ (high activity) in the formed body 15, formed by a temporary binder removal treatment, is converted stepwise from NdH₃ (high activity) to NdH₂ (low activity) and, thereby, activity of the formed body 15 activated by the binder removal treatment is reduced. Thereby, even when the formed body 15 after the binder removal treatment is subsequently transferred into the atmosphere, Nd is prevented from combining with oxygen, and deterioration of residual magnetic flux density and coercive force is prevented. Besides, an effect of returning the structure of magnet crystals from NdH₂ and the like to a Nd₂Fe₁₄B structure can also be expected.

Subsequently, a sintering treatment is performed, where the formed body 15 after the binder removal treatment is sintered. In addition, the method for sintering the formed body 15 includes: uniaxial pressure sintering where the formed body is sintered in a state pressed in a uniaxial direction; biaxial pressure sintering where the formed body is sintered in a state pressed in two axial directions; and isotropic pressure sintering where the formed body is sintered in a state pressed in isotropic directions. For example, in the present embodiment, uniaxial pressure sintering is used. Further, pressure sintering includes, for example, hot press sintering, hot isostatic press (HIP) sintering, ultrahigh pressure synthesis sintering, gas pressure sintering, spark plasma sintering (SPS), and the like. However, it is preferable to perform sintering by an inner heat type sintering apparatus having a heat source installed in the sintering furnace, the heat source being capable of being pressed in a uniaxial direction.

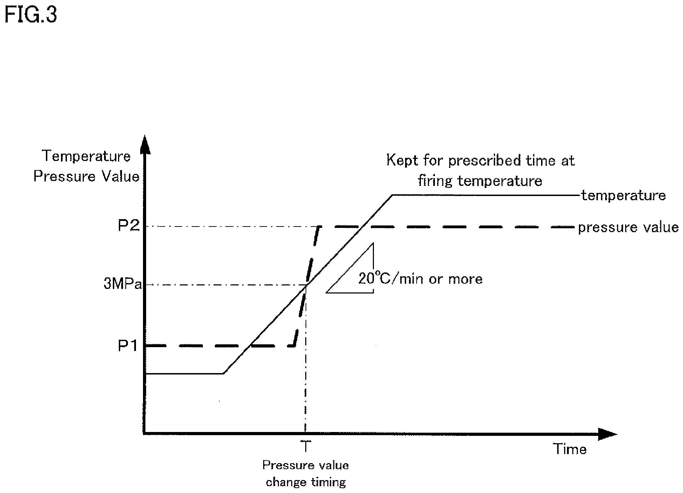

Furthermore, when performing the pressure sintering, the pressing direction is preferably set in a direction vertical to the direction in which the magnetic field was applied (however, only when the magnetic field orientation step was performed). That is, it is preferable to press the formed body in a direction vertical to the direction of C-axis (axis of easy magnetization) of the magnet particles (for example, in a direction orthogonal to a plane on which the C-axes are oriented), the magnet particles having been oriented by the magnetic field orientation treatment. Besides, in the present embodiment, the pressure value is, as is illustrated in Fig. 3, changed stepwise from P1 (initial value) to P2 during heating up of the formed body 15. Specifically, from the start of heating up of the formed body 15 to a predetermined timing T during heating up of the formed body 15 (hereinafter, referred to as a pressure value change timing), the pressure value for pressing the formed body 15 is set to less than 3 MPa. On the other hand, after the pressure value change timing T, the pressure value for pressing the formed body 15 is set to 3 MPa or more. More specifically, after the pressure value change timing T, the pressure value is set to 3 MPa or more and 30 MPa or less, preferably 3 MPa or more and 20 MPa or less, more preferably 3 MPa or more and 15 MPa or less, even more preferably 5 MPa or more and 15 MPa or less. When pressing value becomes higher than the above-mentioned pressure, there is a fear that the axis of easy magnetization of the magnet particle grows in such a way as to become parallel to the pressing direction, and there is a possibility that orientation disorder of magnet particles is generated. In addition, alteration of the pressure value may be performed in one step as illustrated in Fig. 3, or in a plurality of steps. Besides, before the pressure value change timing T, the pressure value P1 for pressing the formed body 15 may be set to 0 (that is, no pressure).

Further, the pressure value change timing T can be suitably set during heating up of the formed body 15, but is set to any timing when the temperature of the formed body 15 is in the range of 300°C to 900°C, preferably 550°C to 900°C, more preferably 600°C to 850°C, even more preferably 600°C to 800°C. The temperature of the formed body 15 was measured by inserting a thermocouple into a sintering die in which the formed body 15 was stored. Furthermore, the highest temperature reached during sintering is preferably 900°C or higher. By setting the highest temperature reached during sintering to 900°C or higher, the density of the sintered body is increased, and magnetic characteristics of the sintered body after magnetization and strength of the sintered body can be improved.

Moreover, it is desirable that the pressure value change timing T is a timing when magnet particles contained in the formed body 15 begin to fuse (or a timing when fusion has begun slightly). Here, the "timing when magnet particles begin to fuse" can be specified by, for example, the following method. First, while applying a pressure of 4.9 MPa in advance from room temperature, the temperature is raised at 20°C/min and a displacement rate of a pressing punch (shrinkage rate in the pressing direction during sintering) is measured. Then, at 300°C or higher, a temperature range, where the shrinkage rate α in the pressing direction becomes 0.0% to 35.0%, preferably 0.2% to 20.2%, more preferably 1.2% to 20.2%, even more preferably 1.4% to 10.4%, especially preferably 1.4% to 4.7%, is judged to be the "the timing when magnet particles begin to fuse."

Meanwhile, in sintering of the formed body 15, the temperature is raised to the sintering temperature (for example, 940°C) at a heat-up rate of 20°C/min or higher, more preferably 50°C/min or higher. By increasing the heat-up rate, productivity is improved and surface roughness of the sintered body tends to decrease. An upper limit of the sintering temperature (the highest temperature reached) is preferably 900°C or higher, more preferably 950°C or higher. Thereafter, the formed body is kept at the sintering temperature for a predetermined time (for example, until the shrinkage rate in the pressing direction becomes nearly 0). Subsequently, the formed body is cooled and again subjected to a heat treatment at 300°C to 1000°C for 2 hours. And, as a result of sintering, there is manufactured a sintered body (hereinafter, referred to simply as a sintered body 16) as a base of a sintered magnet according to the present invention.

Thereafter, magnetization of the sintered body 16 is performed along the C-axis. As a result, it becomes possible to manufacture a permanent magnet 1. In addition, to magnetize the sintered body 16, there are used, for example, a magnetizing coil, a magnetizing yoke, a condenser-type magnetizing power source apparatus, and the like.

### [Examples]

Hereinafter, examples of the present invention will be described in comparison with comparative examples.

### [Example 1]

### <Crushing>

An alloy of alloy composition A shown in the following Table 1, which was obtained by a strip casting method, was made to absorb hydrogen at room temperature and was kept at 0.85 MPa for 1 day. Thereafter, while cooling with liquefied Ar, hydrogen crushing was performed by maintaining the alloy at 0.2 MPa for 1 day.

### [Table 1]

### <Pulverization>

With 100 parts by weight of hydrogen crushed alloy coarse powder was mixed 1.5 kg of Zr beads (2 mm ϕ), the mixture was charged into a ball mill having a tank volume of 0.8 L (product name: Attritor 0.8 L, manufactured by Nippon Coke & Engineering Co., Ltd.), and the alloy coarse powder was pulverized at a rotational speed of 500 rpm for 2 hours. As a pulverization aid during pulverization, 10 parts by weight of benzene was added, and liquefied Ar was used as a solvent. The particle size after pulverization was approximately 1 um.

### <Kneading>

With 100 parts by weight of alloy particles after pulverization was mixed a binder having a binder composition a shown in the following Table 2 and an orientation lubricant, and toluene was removed in a vacuum atmosphere, while heating and stirring the mixture at 70°C by a mixer (device name: TX-0.5, manufactured by Inoue Seisakusho). Thereafter, the mixture was kneaded for 2 hours under reduced pressure to prepare a clay-like compound.

### [Table 2]

### <Forming>

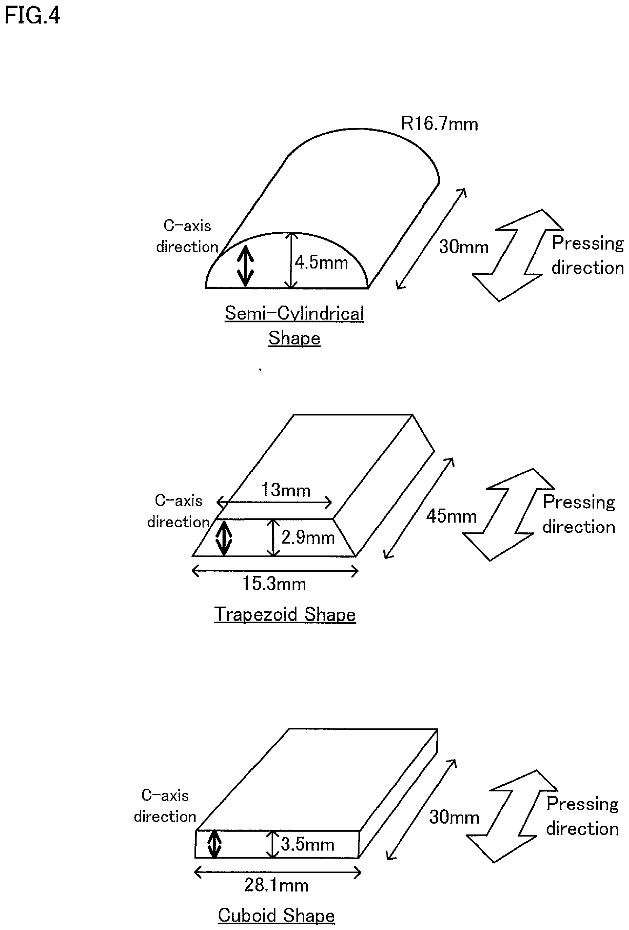

The compound prepared by kneading was formed into a semi-cylindrical shape shown in Fig. 4.

### <Orientation>

In Example 1, no orientation step was performed.

### <Oil Removal Step>

A formed body, inserted in a graphite mold, was subjected to an oil removal treatment under a vacuum atmosphere. Evacuation was performed by a rotary pump, and the formed body was heated up at a rate of 0.9°C/min from room temperature to 100°C and kept thereat for 60 hours.

### <Binder Removal Step>

The formed body, which had been subjected to the oil removal treatment, was subjected to a binder removal treatment under a hydrogen pressure atmosphere of 0.8 MPa. The formed body was heated up from room temperature to 350°C in 8 hours and kept thereat for 2 hours. Further, the hydrogen flow rate was 2 to 3 L/min.

### <Sintering>

After the binder removal treatment, a punch made of graphite was inserted into the graphite mold, and pressure forming was performed by heating the formed body and, at the same time, pressing the formed body with the punch. The pressing direction was set in the depth direction of the formed body shown in Fig. 4. Specifically, sintering was performed as follows: the formed body was heated up from ordinary temperature to 700°C at 20°C/min and, during that period, 0.5 MPa was applied as an initial pressure value; when the temperature reached 700°C, the pressure value was increased to 4.9 MPa, and thereafter the formed body was heated up to 950°C at 20°C/min with a pressure of 4.9 MPa being applied; and after the sintering temperature reached 950°C, the temperature was kept thereat until a shrinkage factor in the pressing direction became nearly zero while applying a pressure of 4.9 MPa.

### <Evaluation>

A surface oxidized layer of a sintered body after pressure sintering was removed (100 to 300 µm) by a grinding machine (device name: PSG42SA-iQ, manufactured by Okamoto Machine Tool Works, Ltd.). Thereafter, external appearance of the sintered body was visually observed and, when there were no cracks, the external appearance was evaluated as "○ (good)" and, when there were cracks, the external appearance was evaluated as "× (bad)." Furthermore, the degree of shrinkage due to sintering was evaluated and, when the sintered body shrunk greatly (about 50%) only in the pressing direction and shrunk very little in other directions, the sintered body was regarded as capable of following the mold and was evaluated as "○ (good)." More specifically, when the shrinkage factor, α, in the pressing direction was 45% or more, the result was evaluated as "○ (good)." The results are shown in Table 3. As shown in Table 3, with the sample of Example 1, no cracks were confirmed and its followability to the sintering die was good, resulting in "○ (good)" evaluations. Besides, surface roughness of the sintered body was measured by 3D Measuring Macroscope (VR-3200) manufactured by KEYENCE. Specifically, in a face having the largest area among the faces in the sintered body, which are parallel to the pressing direction, a difference between the maximum and minimum heights was taken as a value of the surface roughness.

### [Table 3]

### (Examples 2 to 10, Comparative Examples 1 to 3)

Each sintered body was obtained by performing operations, which are fundamentally the same as in Example 1, according to the conditions described in Table 3. Details of steps, which are not described in Example 1, are given in the following.

### <Jet Mill Pulverization>

Jet mill pulverization was performed as follows: with 100 parts by weight of coarse alloy powder obtained by hydrogen crushing was mixed 1 part by weight of methyl caproate, and thereafter the mixture was pulverized by a helium jet mill pulverizer (device name: PJM-80HE, manufactured by NPK); collection of pulverized alloy powder was performed through separation and recovery by a cyclone method and ultra-fine powder was removed; the feed rate during pulverization was set to 1 kg/h, introduction pressure of He gas was 0.6 MPa, flow rate thereof was 1.3 m3/min, and the helium gas had an oxygen concentration of 1 ppm or less and a dew point of -75°C or lower. After pulverization, the particle size was about 1 µm.

### <Octene Treatment>

To 100 parts by weight of alloy particles after pulverization such as ball mill or jet mill pulverization, 40 parts by weight of 1-octene was added, and the mixture was heated and stirred for 1 hour at 60°C by a mixer (device name: TX-0.5, manufactured by INOUE MFG., INC.). Thereafter, a dehydrogenation treatment was performed by removing 1-octene and a reaction product thereof by heating under reduced pressure. Subsequently, the kneading step was performed.

### <Orientation>

An orientation treatment was performed by applying a parallel magnetic field from outside to a mold made of stainless steel (SUS), in which a composite material after forming is stored, by using a superconductive solenoid coil (device name: JMTD-12T100, manufactured by JASTEC). This orientation was performed for 10 minutes at a temperature of 80°C with the outside magnetic field being set to 7 T. Thereafter, by applying an attenuating alternating magnetic field, the formed body which had been subjected to the orientation treatment was demagnetized. Meanwhile, the orientation direction was set for each shape of the formed body and is shown in Fig. 4.

### <Evaluation>

It became clear that cracks are suppressed by setting pressing start temperature to 300°C to 800°C (Examples 1 to 10). It became clear that cracks occur when pressing is started from ordinary temperature and when pressing was started from 950°C (Comparative Examples 1 and 2).

It is thought that, when pressing is started from ordinary temperature, the magnet particles are not fused with each other and, therefore, they cannot withstand pressure of the pressing and generate cracks. It has been confirmed that, as a formed body of magnet particles is pressed at room temperature, cracks occur in the formed body at about 3 MPa. Thus, when pressing is performed from room temperature, it is thought preferable to heat up the formed body while applying a pressure of 3 MPa or less, and to perform pressure sintering at 3 MPa or more after the magnet particles have fused with each other by heat and strength has increased.

Further, when pressing value is set to 2.5 MPa, the formed body could not follow the sintering die, and it is thought that the pressing value is insufficient (Comparative Example 3). As for the pressing value, even when a high pressure of 11.8 MPa was applied, it was possible to sinter the formed body without occurrence of cracks (Examples 5 to 10).

As for the heat-up rate, it became clear that pressure sintering can be performed with good followability of the formed body to the sintering die in a range of 5°C/min to 50°C/min, while suppressing cracks (Examples 1 to 10). However, there is a tendency that the faster the heat-up rate, the less the surface roughness of the sintered body and, thus, it is possible to reduce grinding after sintering and also to improve productivity (Examples 1, and 5 to 10).

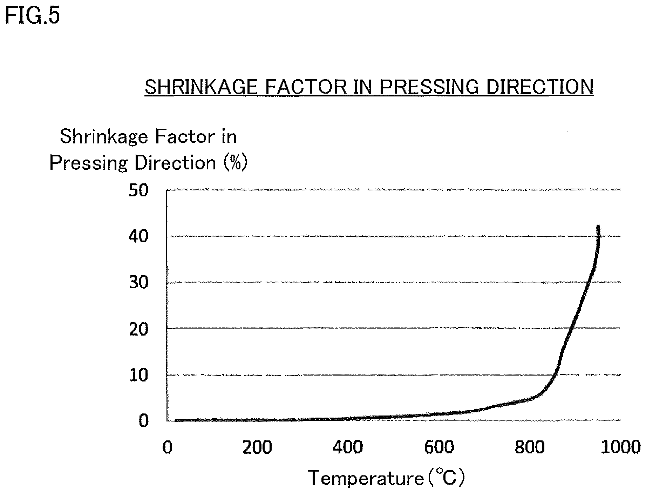

Furthermore, it is also possible to judge beforehand the pressure value change timing T to increase the pressure value in terms of a shrinkage factor in the pressing direction. While applying a pressure of 4.9 MPa from room temperature, heating up of the formed body is performed at 20°C/min and the rate of displacement of the pressing punch (shrinkage factor in the pressing direction when sintering) is calculated. The results are illustrated in Fig. 5. As is shown in Fig. 5, it is possible to perform pressure sintering without cracks by pressing the formed body at a pressure of 3 MPa or more in a temperature range where the shrinkage factor in the pressing direction becomes 0.2% to 20%.

Besides, in Table 4 are shown the results when the particle size of the magnet powder was adjusted to 3 µm by changing the pulverization speed during the jet mill pulverization. In addition, the binder has a composition of, relative to magnet powder, 1.5 parts by weight of 1-octadecyne, 4.5 parts by weight of 1-octadecene, and 4 parts by weight of PIB (B150, produced by BASF).

### [Table 4]

In Comparative Example 4 where pressing was not performed during sintering even when the particle size had changed, shrinkage occurred in all directions and, therefore, the formed body never followed the sintering die. Further, in Comparative Example 5 where the maximum load during sintering was 2 MPa, the pressure was insufficient and, therefore, followability of the formed body to the sintering die was poor, and roughness of the magnet surface was 510 µm, a very bad result. When roughness of the magnet surface is large, grinding needs to be performed corresponding to an increment in the roughness, resulting in a large decrease in yield.

In Examples 11 to 15 where maximum pressure during pressure sintering was set to respective values from 3 MPa to 26 MPa and examination was made regarding the maximum pressure, shrinkage during sintering occurred only in a direction nearly parallel to the pressing direction. Thus, followability of the formed body to the sintering die was good and, as a result, it was possible to suppress the roughness of the magnet surface to 250 µm or less. From the above results, it is thought advantageous for crack suppression to perform pressure sintering with a maximum pressing value in the range of 3 MPa to 30 MPa.

Furthermore, in Examples 16 to 18, where maximum (final) temperature during sintering was set to respective values from 850°C to 970°C to examine maximum (final) temperature during sintering, it is clear that, by setting the maximum temperature during sintering to 900°C or higher and keeping the temperature thereat, it becomes possible to make the density of the sintered body be 7.3 g/cm³ or more. By increasing the density of the sintered body, it is expected that magnetic characteristics thereof improve and, further, strength of the sintered body also improves.

In Examples 19 and 20, temperature at which the pressing value becomes 3 MPa or more was examined and, under both conditions, it was possible to make the surface roughness of the sintered body be 250 µm or less. However, the surface roughness of the sintered body tended to be smaller when the temperature at which the pressing value becomes 3 MPa or more was 900°C or lower. This is thought to be because, when the temperature at which the pressing value becomes 3 MPa or more is too high, shrinkage of the formed body begins and, as a result, a space is generated between the formed body and the sintering die, and the space is subsequently squeezed by pressing.

Further, in Example 21, the particle size was changed to 4 µm. In Example 21, as with the above Examples, it was possible to suppress cracks of the sintered body while improving followability thereof to the sintering die.

Moreover, in Table 5, there are shown evaluation results of magnetic characteristics of sintered bodies after being heat treated at 970°C for 9 hours after pressure sintering and magnetized. In addition, evaluation of squareness (Hk/Hcj) was made twice and an average was calculated. Meanwhile, the closer the squareness (Hk/Hcj) is to 100%, the more excellent electric characteristics the sintered body can be evaluated to have.

### [Table 5]

As shown in Table 5, the squareness tends to become better when pressure increase start temperature becomes higher. Thus, when the cracks and followability to the sintering die, as well as stability of the electric characteristics are considered, it is thought preferable to start increasing pressure at 600°C or higher.

From the above results, it became clear that it is possible to improve followability of the formed body to the sintering die, while suppressing cracks due to pressing, by setting the initial load to 3 MPa or less, setting the pressure value change timing T, where the pressure value is increased, to a formed body temperature in a range of 300°C to 900°C, and further setting the pressure value after the pressure value change timing T to 3 MPa or more.

In addition, the present invention is not limited to the aforementioned examples, and it is a matter of course that various improvements and modifications can be made, as long as they do not deviate from the gist of the present invention.

For example, pulverization conditions, kneading conditions, magnetic field orientation process, binder removal conditions, sintering conditions, and the like of the magnet powder are not limited to the conditions described in the above-mentioned examples. For example, even though, in the above-mentioned examples, a magnet raw material is pulverized by wet pulverization using a bead mill, it may be decided to pulverize the raw material by dry pulverization by a jet mill. Furthermore, the atmosphere in which the binder removal treatment is performed may be one other than the hydrogen atmosphere (for example, a nitrogen atmosphere, a He atmosphere, an Ar atmosphere, and the like), as long as it is a non-oxidizing atmosphere. Besides, in the above-mentioned examples, the magnet is sintered by an inner heat type sintering apparatus having a heat source installed in the sintering furnace, the heat source being capable of pressing in a uniaxial direction, but the magnet may be sintered using other pressure sintering methods (for example, SPS sintering and the like). Further, the binder removal treatment may be omitted. In that case, the binder removal step will be performed in the process of sintering treatment.

Furthermore, in the above-mentioned examples, it is suggested to use, as a binder, resins, long chain hydrocarbons, and fatty acid methyl esters, but there may be used other materials.

Besides, in the present embodiments, a Nd-Fe-B based magnet was described as an example, but there may be used other magnets (for example, a cobalt magnet, an alnico magnet, a ferrite magnet, and the like). Further, in the present invention, the alloy composition is made richer in Nd component than the stoichiometric composition, but may be adjusted to the stoichiometric composition.

Moreover, in the present embodiments, there was described a method of pressure sintering a formed body obtained by subjecting a green body, prepared by forming a compound obtained by kneading a binder and magnet powder, to a binder removal treatment, but the present invention is not limited thereto. For example, a case where a formed body obtained by pressure powder forming of mainly magnet powder is pressure sintered without using a binder is also included in the scope of the present invention.

The present invention is not limited to each embodiment mentioned above, and various variations are possible in the scope shown in the claims, and embodiments obtained by suitably combining technical means disclosed respectively in different embodiments are also included in the technical scope of the present invention.

### [Reference Signs List]

1. Permanent magnet
11. Jet mill
12. Compound
13. Formed body (before binder removal)
14. Magnetic field source
15. Formed body (after binder removal)
16. Sintered body (sintered body as a base of sintered magnet)

**TABLE 1**

| Alloy Composition | Nd | Fe | B | Pr | Dy | Cu | Ga | Nb | Co | Al |
|---|---|---|---|---|---|---|---|---|---|---|
| A | 23.00 | remainder | 1.00 | 6.75 | 0.00 | 0.10 | 0.10 | 0.20 | 2.00 | trace |
| B | 25.25 | remainder | 1.01 | 6.75 | 0.00 | 0.13 | 0.13 | 0.20 | 2.00 | 0.10 |
| | | | | | | | | | | (wt%) |

**TABLE 2**

| Binder Composition | 1-Octadecyne | 1-Octadecene | Polyisobutylene B150 (7 wt% Toluene Solution) |
|---|---|---|---|
| a | 6.7 | 0.0 | 57.1 |
| b | 1.7 | 4.3 | 57.1 |

| | | | |
|---|---|---|---|
| (Parts by weight, added to 100 parts by weight of magnet powder) | | | |

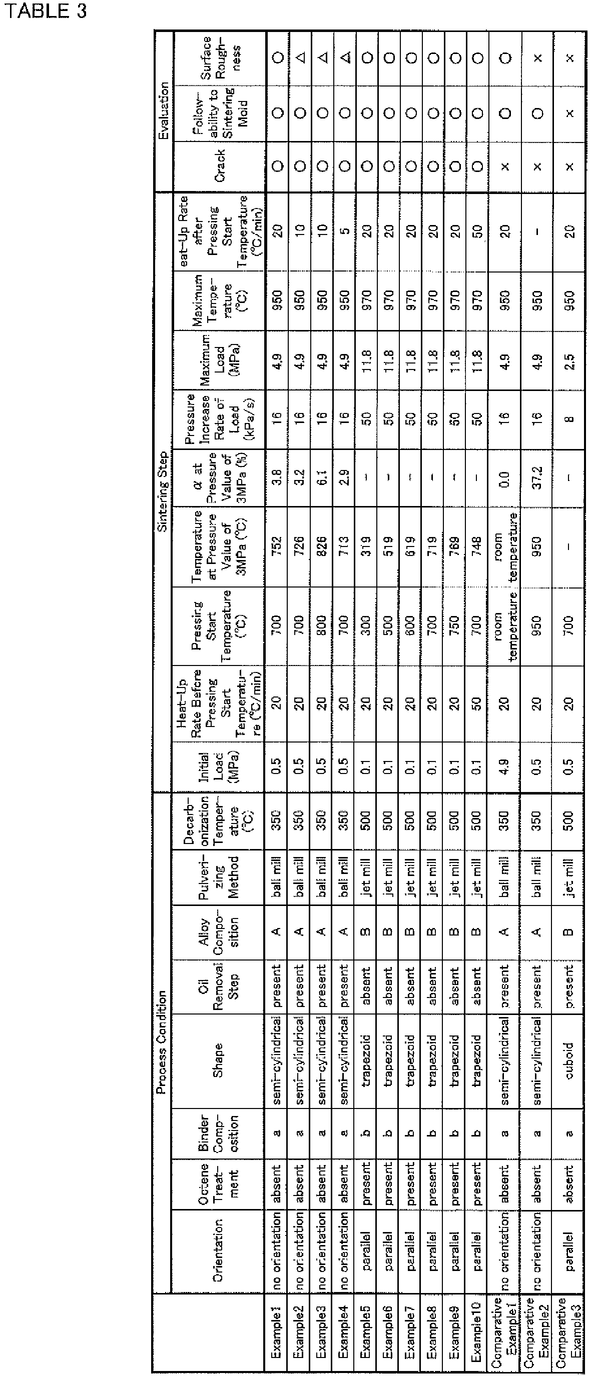

**TABLE 4**

| | Process Condition | | | Sintering Step | | | | | | | | Evaluation | | | | |
|---|---|---|---|---|---|---|---|---|---|---|---|---|---|---|---|---|
| | Shape | Alloy Composition | Particle Size (*µ*m) | Initial Load (MPa) | Maximum Load (MPa) | Pressing Start Temperature (°C) | Temperature at Pressure Value of 3MPa (°C) | *α* at Pressure Value of 3MPa (%) | Maximum (Final) Temperature (°C) | Time Kept at Final Temperature (min) | eat-Up Rate after Pressing Start Temperature (°C/min) | Crack | Sintered Body Density (g/cm3) | Followability to Sintering Mold | Shrinkage Factor in Pressing Direction α(%) | Magnet Surface Roughness (*µ*m) |
| Comparative Example4 | trapezoid | A | 3 | - | 0.0 | - | - | - | 1000 | 120 | - | ○ | 7.54 | × | - | - |
| Comparative Example5 | trapezoid | A | 3 | 1.3 | 2.0 | 700 | - | - | 970 | 30 | 18 | ○ | 7.40 | × | 38.9 | 510 |
| Example11 | trapezoid | A | 3 | 2.6 | 3.0 | 700 | 790 | 5.0 | 970 | 30 | 18 | ○ | 7.54 | ○ | 46.0 | 210 |
| Example12 | trapezoid | A | 3 | 2.6 | 5.0 | 700 | 715 | 1.9 | 970 | 30 | 18 | ○ | 7.54 | ○ | 48.0 | 100 |
| Example13 | trapezoid | A | 3 | 2.6 | 13.0 | 700 | 704 | 1.7 | 970 | 10 | 18 | ○ | 7.48 | ○ | - | - |
| Example14 | trapezoid | A | 3 | 0.1 | 19.6 | 600 | 614 | 0.7 | 970 | 15 | 18 | ○ | - | ○ | - | 100 |
| Example15 | trapezoid | A | 3 | 2.6 | 26.0 | 700 | 702 | 1.6 | 950 | 5 | 18 | ○ | - | ○ | - | - |
| Example16 | trapezoid | A | 3 | 2.6 | 13.0 | 700 | 704 | 1.7 | 850 | 30 | 18 | ○ | 6.80 | × | 44.0 | 25 |
| Example17 | trapezoid | A | 3 | 2.6 | 13.0 | 700 | 704 | 1.7 | 900 | 30 | 18 | ○ | 7.30 | ○ | 47.8 | 25 |
| Example18 | trapezoid | A | 3 | 2.6 | 13.0 | 700 | 704 | 1.7 | 970 | 10 | 18 | ○ | 7.48 | ○ | - | - |
| Example19 | trapezoid | A | 3 | 2.6 | 13.0 | 850 | 854 | 13.9 | 970 | 15 | 18 | ○ | 7.48 | ○ | 48.2 | 170 |
| Example20 | trapezoid | A | 3 | 2.6 | 13.0 | 900 | 904 | 21.5 | 970 | 15 | 18 | ○ | 7.52 | ○ | 47.8 | 240 |
| Example21 | trapezoid | A | 4 | 2.6 | 13.0 | 700 | 704 | - | 1000 | 10 | 18 | ○ | 7.40 | ○ | 48.4 | 30 |

**TABLE 5**

| | Process Condition | | | Sintering Step | | | | | | | | Heat Treatment Step | | Evaluation | |
|---|---|---|---|---|---|---|---|---|---|---|---|---|---|---|---|
| | Shape | Alloy Composition | Particle Size (*µ*m) | Initial Load (MPa) | Maximum Load (MPa) | Pressing Start Temperature (°C) | Temperature at Pressure Value of 3MPa (°C) | α at Pressure Value of 3MPa (%) | Maximum (Final) Temperature (°C) | Time Kept at Final Temperature (min) | Heat-Up Rate after Pressing Start Temperature (°C/min) | Heat Treatment Temperature after Pressure Sintering (°C) | Heat Treatment Time after Pressure Sintering (h) | Squareness Hk/Hcj (first time/second time [%]) | Average of Squareness Hk/Hcj (%) |
| Comparative Example6 | trapezoid | A | 1 | 1.3 | 11.8 | 200 | 216 | -0.1 | 970 | 15 | 20 | 970 | 9 | 79.0/85.2 | 82.10 |
| Example22 | trapezoid | A | 1 | 1.3 | 11.8 | 400 | 416 | 0.0 | 970 | 15 | 20 | 970 | 9 | 77.5/93.5 | 85.50 |
| Example23 | trapezoid | A | 1 | 1.3 | 11.8 | 500 | 516 | 0.2 | 970 | 15 | 20 | 970 | 9 | 92.2/73.6 | 82.90 |
| Example24 | trapezoid | A | 1 | 1.3 | 11.8 | 550 | 566 | 0.4 | 970 | 15 | 20 | 970 | 9 | 83.7/93.8 | 83.75 |
| Example25 | trapezoid | A | 1 | 1.3 | 11.8 | 600 | 616 | 0.7 | 970 | 15 | 20 | 970 | 9 | 93.7/94.5 | 94.10 |
| Example26 | trapezoid | A | 1 | 1.3 | 11.8 | 650 | 666 | 1.1 | 970 | 15 | 20 | 970 | 9 | 93.4/94.1 | 93.80 |

## Claims

1. A method for manufacturing a sintered body as a base of a sintered magnet, comprising a step of heating up a formed body obtained by forming magnet powder to a firing temperature and thereafter sintering the formed body by keeping in a pressurized state,
wherein in the sintering step, a pressure value for pressing the formed body is set to: less than 3 MPa from the start of heating up of the formed body to a predetermined timing during heating up of the formed body; and 3 MPa or more after the timing.

2. The method for manufacturing a sintered body as a base of a sintered magnet according to Claim 1, wherein the timing when the pressure value is set to 3 MPa or more is any timing when the temperature of the formed body is in the range of 300°C to 900°C.

3. The method for manufacturing a sintered body as a base of a sintered magnet according to Claim 1, wherein the timing when the pressure value is set to 3 MPa or more is a timing when the magnet powder contained in the formed body begins to fuse.

4. The method for manufacturing a sintered body as a base of a sintered magnet according to any one of Claims 1 to 3, wherein the formed body is sintered in a state where the pressure value is set to 3 MPa or more after the timing by raising the temperature of the formed body finally to 900°C or higher and keeping the temperature thereat.

5. The method for manufacturing a sintered body as a base of a sintered magnet according to any one of Claims 1 to 4, wherein a maximum value of the pressure value for pressing the formed body is 30 MPa or less.

6. The method for manufacturing a sintered body as a base of a sintered magnet according to any one of Claims 1 to 5, wherein in the sintering step, a heat-up rate of the formed body is 20°C/min or higher.

7. The method for manufacturing a sintered body as a base of a sintered magnet according to any one of Claims 1 to 6, further comprising a step of subjecting the magnet powder to magnetic field orientation by applying a magnetic field to the formed body, wherein in the sintering step, the formed body is pressed in a direction vertical to the direction of orientation of the magnet powder.

8. The method for manufacturing a sintered body as a base of a sintered magnet according to any one of Claims 1 to 7, wherein the formed body is obtained by executing a debinding process of a green body formed of a mixture containing magnet powder and a binder.

9. A method for manufacturing a permanent magnet, comprising a step of magnetizing the sintered body as a base of a sintered magnet, manufactured by the method for manufacturing a sintered body as a base of a sintered magnet according to any one of Claims 1 to 8.
